(19) Europäisches Patentamt / European Patent Office / Office européen des brevets

(11) **EP 1 942 334 A1**

(12) **EUROPEAN PATENT APPLICATION**
published in accordance with Art. 153(4) EPC

(43) Date of publication:
**09.07.2008 Bulletin 2008/28**

(51) Int Cl.:
***G01N 21/64*** *(2006.01)*

(21) Application number: **06810623.6**

(22) Date of filing: **27.09.2006**

(86) International application number:
**PCT/JP2006/319132**

(87) International publication number:
**WO 2007/037252 (05.04.2007 Gazette 2007/14)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.09.2005 JP 2005282686**
**28.09.2005 JP 2005282687**

(71) Applicant: **Olympus Corporation**
**Tokyo 151-0072 (JP)**

(72) Inventors:
- **NISHIMURA, Junichi**
  **Intellectual Property Support Dpt.**
  **Tokyo 192-8512 (JP)**
- **SUZUKI, Akemi**
  **Intellectual Property Support Dpt.**
  **Tokyo 192-8512 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **FLUORESCENCE SPECTRAL ANALYZER**

(57) A fluorescence spectroscopy apparatus (100) includes an excitation optical system (110), an excitation light control unit (130), a fluorescence detection unit (140), a signal processing unit (150), and a computing unit (160). The excitation optical system (110) includes an excitation light applying unit (120) to generate excitation light. The excitation light control unit (130) controls the excitation light applying unit (120) so that excitation light beams with different wavelengths are exclusively applied to a sample (S) at shifted times. The excitation light applying unit (120) applies excitation light beams with different wavelengths to one region on the sample (S). The fluorescence detection unit (140) detects fluorescence generated from the sample (S) in accordance with the application of excitation light. The signal processing unit (150) processes a signal reflecting the fluorescence intensity obtained by the fluorescence detection unit (140). The computing unit (160) performs correlation analysis on the fluctuations of fluorescence for each of the different wavelengths on the basis of a change in the wavelength of excitation light applied to the sample (S) by the excitation light control unit (130) and the detection result obtained by the fluorescence detection unit (140) .

FIG.1

EP 1 942 334 A1

**Description**

Technical Field

The present invention relates to a fluorescence spectroscopy apparatus.

Background Art

A fluorescence correlation spectroscopy method (FCS method) is a technique of obtaining the auto-correlation function of fluorescence intensity by analyzing the fluctuations of light caused by the Brownian motion of fluorescence molecules in the microscopic observation area of a microscopic field, thereby analyzing the diffusion time of each molecule and the average number of molecules. This technique is described in detail in, for example, Kinjyo, "Single Molecule Detection Using Fluorescence Correlation Spectroscopy", Protein Nucleic Acid Enzyme, 1999, vol. 44, No. 9, 1431 - 1438.

Fluorescence cross-correlation spectroscopy method (FCCS method) is a technique of analyzing the relevance between different fluorescence signals by obtaining the cross-correlation function between them. This technique is used to analyze the interaction between molecules labeled with fluorescence dyes of two colors, and is disclosed in detail in, for example, Petra. Schwille et at, "Dual-Color Fluorescence Cross-Correlation Spectroscopy for Multicomponent Diffusional Analysis in Solution", Biophysical Journal 1997, 72, 1878 - 1886, and Petra. Schwille et at, "A dynamic view of cellular processes by in vivo fluorescence auto- and cross-correlation spectroscopy", Methods 29 (2003), 74 - 85. The fluorescence cross-correlation spectroscopy method is suitable for the interaction between proteins with few diffusion times and the like. Confocal fluorescence coincidence analysis (CFCA method) is a similar analysis method, which is described in detail in Winkler et al., "Confocal fluorescence coincidence analysis (CFCA)", Proc. Natl. Acad. Sci. U.S.A. 96: 1375 - 1378, 1999.

Disclosure of Invention

In the cross-correlation spectroscopy method (FCCS method), when two fluorescence dyes whose fluorescence spectra overlap each other are used, it is impossible to perform accurate cross-correlation computation because of the influence of a measurement error due to crosstalk.

The present invention has been made in consideration of such a situation, and has as its object to provide a fluorescence spectroscopy apparatus that can perform accurate cross-correlation computation without any influence of a measurement error due to crosstalk.

A fluorescence spectroscopy apparatus according to the present invention comprises excitation optical means for alternately applying light beams with different wavelengths or different intensities to a specific region of a sample at shifted times, fluorescence detection means for detecting fluorescence generated from the sample, signal processing means for performing signal processing for a signal detected by the fluorescence detection means, and computing means for performing correlation analysis on a signal generated by the signal processing means.

Brief Description of Drawings

FIG. 1 schematically shows a fluorescence spectroscopy apparatus according to the first embodiment of the present invention;
FIG. 2 shows an example of the arrangement of an excitation light applying unit shown in FIG. 1;
FIG. 3 shows another example of the arrangement of the excitation light applying unit shown in FIG. 1;
FIG. 4. shows a flowchart of the operation of the fluorescence spectroscopy apparatus shown in FIG. 1;
FIG. 5 shows a timing chart of signals in the fluorescence spectroscopy apparatus shown in FIG. 1;
FIG. 6 schematically shows a fluorescence spectroscopy apparatus according to the second embodiment of the present invention;
FIG. 7 schematically shows a fluorescence spectroscopy apparatus according to the third embodiment of the present invention;
FIG. 8A shows part of a flowchart for operation data generation by a signal processing unit and analysis processing by a computing unit in FIG. 7;
FIG. 8B shows part of a flowchart for operation data generation by the signal processing unit and analysis processing by the computing unit in FIG. 7;
FIG. 9 shows the structure and values of channels;

FIG. 10 shows the data of first fluorescence corresponding to the first fluorescence detection signal in FIG. 5;

FIG. 11 shows division weighting factors for the first fluorescence corresponding to the data in FIG. 10;

FIG. 12 shows a data table obtained by reconstructing the data of the first fluorescence and second fluorescence;

FIG. 13 shows a weighting factor table obtained by reconstructing the weighting factors of the first fluorescence and second fluorescence;

FIG. 14 shows sum-of-product calculation between the data of the first fluorescence;

FIG. 15 shows sum-of-product calculation between the data of the first fluorescence and second fluorescence;

FIG. 16 schematically shows a fluorescence spectroscopy apparatus according to the fourth embodiment of the present invention;

FIG. 17 shows a time-series mixed signal containing fluctuation signals corresponding to the fluctuations of the first fluorescence and second fluorescence that is obtained by the apparatus in FIG. 16;

FIG. 18 shows a pseudo first fluorescence detection signal extracted from the time-series mixed signal in FIG. 17;

FIG. 19 shows a pseudo second fluorescence detection signal extracted from the time-series mixed signal in FIG. 17; and

FIG. 20 shows how crosstalk is generated in two fluorescence dyes whose fluorescence spectra overlap each other.

Best Mode for Carrying Out the Invention

The embodiments of the present invention will be described below with reference to the views of the accompanying drawing.

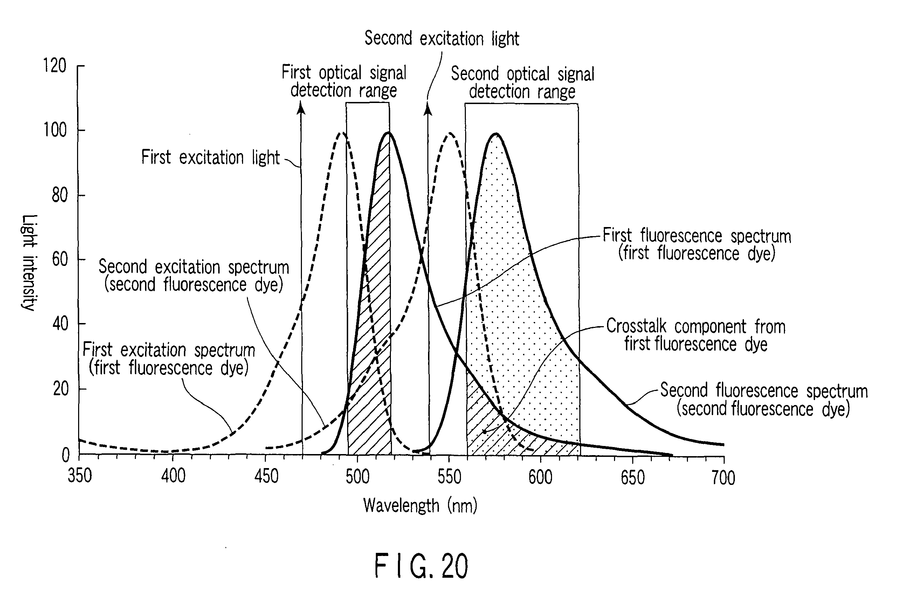

Prior to a description of the embodiments of the present invention, the mechanism of the generation of crosstalk in the cross-correlation spectroscopy method (FCCS method) will be described first with reference to FIG. 20. FIG. 20 shows how crosstalk is generated in two fluorescence dyes whose fluorescence spectra overlap each other. Referring to FIG. 20, when the first excitation light is applied to the first fluorescence dye having the first excitation spectrum, the first fluorescence dye generates the first fluorescence having the first fluorescence spectrum. The first fluorescence is detected by selectively detecting light having a wavelength within the first optical signal detection range by using a filter. When the second excitation light is applied to the second fluorescence dye having the second excitation spectrum, the second fluorescence dye generates the second fluorescence having the second fluorescence spectrum. The second fluorescence is detected by selectively detecting light having a wavelength within the second optical signal detection range by using a filter. As is obvious from FIG. 20, the right bottom portion of the first fluorescence spectrum overlaps the second optical signal detection range. For this reason, when the second fluorescence is detected, the first fluorescence is also detected, resulting in crosstalk. As a consequence, the cross-correlation spectroscopy method (FCCS method) is affected by a measurement error due to crosstalk, resulting in failure to accurately perform cross-correlation computation.

<First Embodiment>

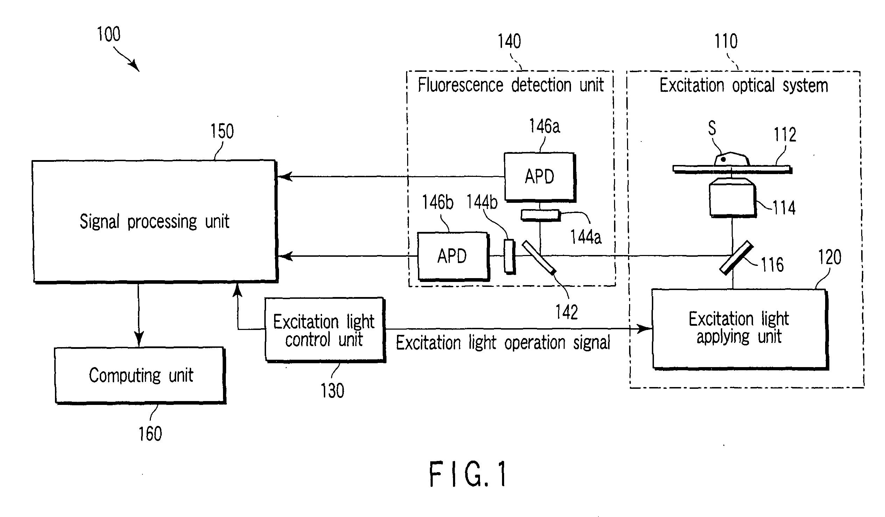

FIG. 1 schematically shows a fluorescence spectroscopy apparatus according to the first embodiment of the present invention. As shown in FIG. 1, a fluorescence spectroscopy apparatus 100 of this embodiment includes an excitation optical system 110, a fluorescence detection unit 140, a signal processing unit 150, and a computing unit 160. The excitation optical system 110 includes an excitation light applying unit 120 to generate excitation light, a stage 112 on which a sample S is placed, an objective lens 114, and a dichroic mirror 116 to separate excitation light and fluorescence.

The fluorescence spectroscopy apparatus 100 further includes an excitation light control unit 130 to control the excitation light applying unit 120 so that excitation light beams with different wavelengths are exclusively applied to the sample S at shifted times. The excitation light applying unit 120 repeatedly applies excitation light beams with different wavelengths to one region on the sample S at a predetermined timing.

The sample S contains, in the region to which excitation light beams with different wavelengths are applied, different dyes to emit fluorescence in response to the excitation light beams with different wavelengths, respectively. The fluorescence spectra of the different dyes overlap at least partly.

The fluorescence detection unit 140 detects fluorescence generated from the sample S in accordance with the application of excitation light.

The signal processing unit 150 processes a signal reflecting fluorescence intensity that is obtained by the fluorescence detection unit 140. The computing unit 160 performs correlation analysis on the fluctuation of fluorescence for each of different wavelengths on the basis of a change in the wavelength of excitation light applied to the sample S by the excitation light control unit 130 and the detection result obtained by the fluorescence detection unit 140. The computing unit 160 performs auto-correlation analysis, cross-correlation analysis, or confocal fluorescence coincidence analysis on the basis of the comparison between output signals corresponding to the respective fluorescence components.

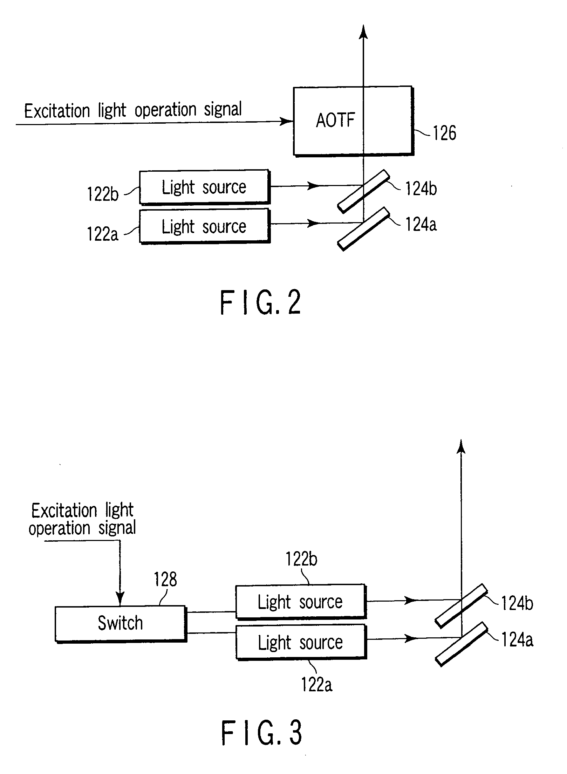

FIG. 2 shows an example of the arrangement of the excitation light applying unit 120. In this case, the excitation light applying unit 120 comprises a first light source 122a, a second light source 122b, a mirror 124a, a dichroic mirror 124b, and an acoustooptic element (AOTF) 126. The first light source 122a and the second light source 122b respectively emit the first excitation light and second excitation light in different wavelength bands. The mirror 124a reflects the first excitation light emitted from the first light source 122a toward the objective lens 114 in FIG. 1. The dichroic mirror 124b transmits the first excitation light reflected by the mirror 124a and reflects the second excitation light emitted from the second light source 122b toward the objective lens 114 in FIG. 1. The first light source 122a and the second light source 122b are continuously driven to continuously emit the first excitation light and the second excitation light, respectively. The acoustooptic element 126 is placed in a common optical path through which the first excitation light and the second excitation light pass. The acoustooptic element 126 has a controllable passband and selectively transmits one of the first excitation light and the second excitation light in accordance with an excitation light operation signal supplied from the excitation light control unit 130 in FIG. 1. That is, the acoustooptic element 126 selects light to be applied to the sample S from the light beams with different wavelengths that are emitted from the first light source 122a and the second light source 122b. The excitation light operation signal is a signal that changes in a time-series manner. The acoustooptic element 126 alternately transmits the first excitation light and the second excitation light.

FIG. 3 shows another example of the arrangement of the excitation light applying unit 120. In this case, the excitation light applying unit 120 comprises the first light source 122a, the second light source 122b, the mirror 124a, the dichroic mirror 124b, and a switch 128. The functions of the first light source 122a, second light source 122b, mirror 124a, and dichroic mirror 124b are the same as those in the case of FIG. 2. In addition, the first light source 122a and the second light source 122b can be ON/OFF-controlled. The switch 128 selectively turns on one of the first light source 122a and the second light source 122b and selectively turns off the other in accordance with an excitation light operation signal supplied from the excitation light control unit 130 in FIG. 1. That is, the switch 128 selects a light source to emit light. The excitation light operation signal is a signal that changes in a time-series manner, the first light source 122a and the second light source 122b are alternately turned on. As a result, the first excitation light and the second excitation light are alternately applied to the sample S. That is, the switch 128 selects a light beam to be applied to the sample S from the light beams with different wavelengths that are emitted from the first light source 122a and the second light source 122b.

Referring back to FIG. 1, the fluorescence detection unit 140 comprises a dichroic mirror 142, a first fluorescence filter 144a, a second fluorescence filter 144b, a first light-detecting element 146a, and a second light-detecting element 146b. The first fluorescence filter 144a selectively transmits the first fluorescence. The second fluorescence filter 144b selectively transmits the second fluorescence. The first light-detecting element 146a has a sensitivity in the wavelength band of the first fluorescence. The second light-detecting element 146b has a sensitivity in the wavelength band of the second fluorescence. That is, the first light-detecting element 146a and the second light-detecting element 146b have sensitivities in different wavelength bands.

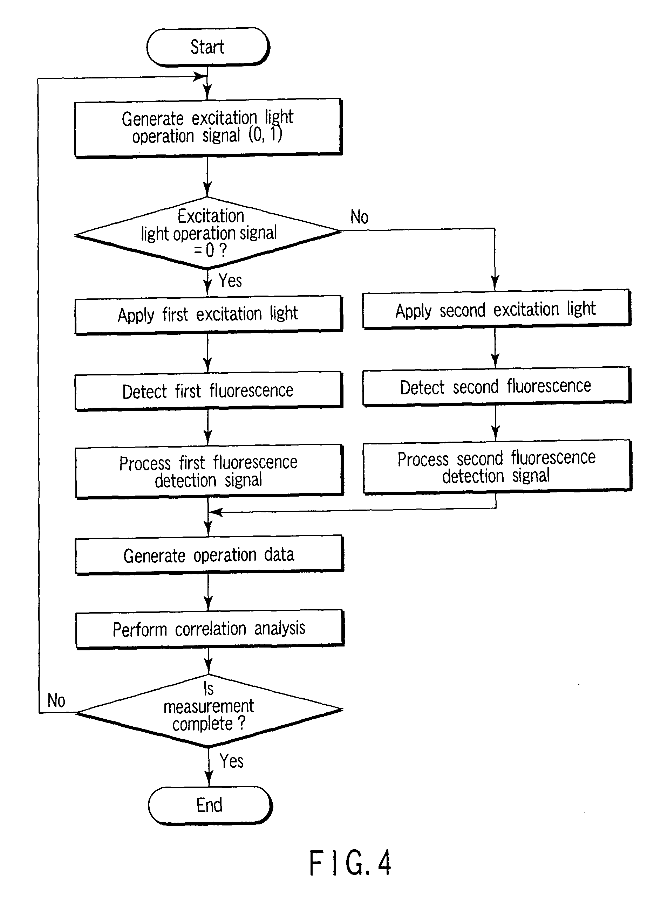

The operation of the fluorescence spectroscopy apparatus according to this embodiment will be described below with reference to the flowchart of FIG. 4.

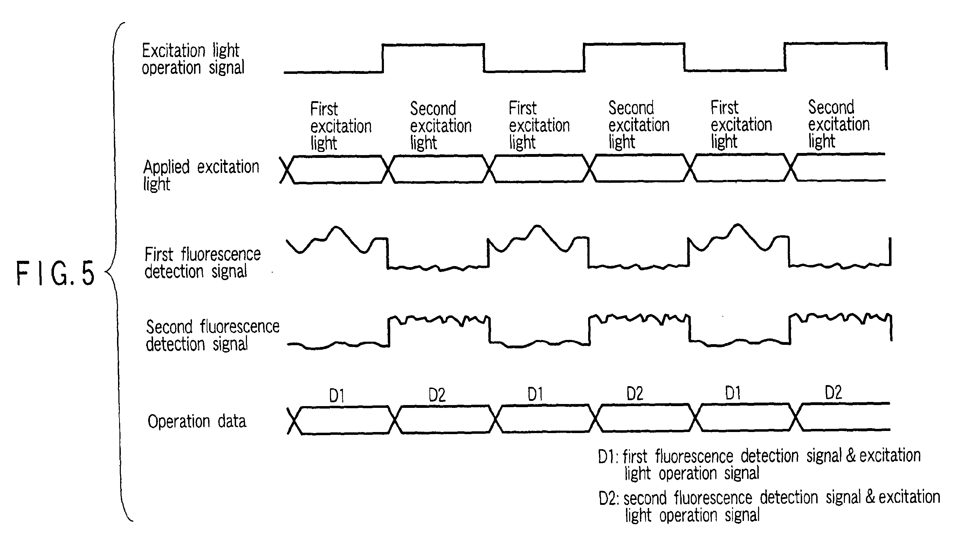

The excitation light control unit 130 generates an excitation light operation signal and outputs it to the excitation light applying unit 120. As shown in FIG. 5, the excitation light operation signal is a binary signal that periodically changes between "0" and "1".

If the excitation light applying unit 120 has the arrangement shown in FIG. 2, the acoustooptic element 126 selectively transmits the first excitation light when the excitation light operation signal is "0", and selectively transmits the second excitation light when the excitation light operation signal is "1".

If the excitation light applying unit 120 has the arrangement shown in FIG. 3, the switch 128 selectively turns on the first light source 122a when the excitation light operation signal is "0", and selectively turns on the second light source 122b when the excitation light operation signal is "1".

As a result, as shown in FIG. 5, the first excitation light and the second excitation light are alternately switched as excitation light to be applied to the sample S.

The sample S generates fluorescence in accordance with the application of excitation light. The first light-detecting element 146a detects the first fluorescence generated from the sample S in accordance with the application of the first excitation light, and outputs the first fluorescence detection signal shown in FIG. 5 to the signal processing unit 150. The second light-detecting element 146b detects the second fluorescence generated from the sample S in accordance with the application of the second excitation light, and outputs the second fluorescence detection signal shown in FIG. 5 to the signal processing unit 150.

The signal processing unit 150 converts the first and second fluorescence detection signals respectively supplied from the first light-detecting element 146a and second light-detecting element 146b of the fluorescence detection unit 140 into fluorescence intensity signals at predetermined time intervals, generates operation data by optimally combining the fluorescence intensity signals and excitation light control signals, and outputs the data to the computing unit 160.

The computing unit 160 performs auto-correlation analysis, cross-correlation analysis, or confocal fluorescence coincidence analysis on the basis of the operation data supplied from the signal processing unit 150.

In this embodiment, the first and second excitation light beams with different wavelengths are exclusively applied to the sample S at shifted times. The first fluorescence and the second fluorescence generated from the sample S in accordance with the application of the first excitation light and second excitation light are respectively detected by the first light-detecting element 146a and second light-detecting element 146b of the fluorescence detection unit 140. This allows accurate cross-correlation computation without any influence of a measurement error due to crosstalk.

<Second Embodiment>

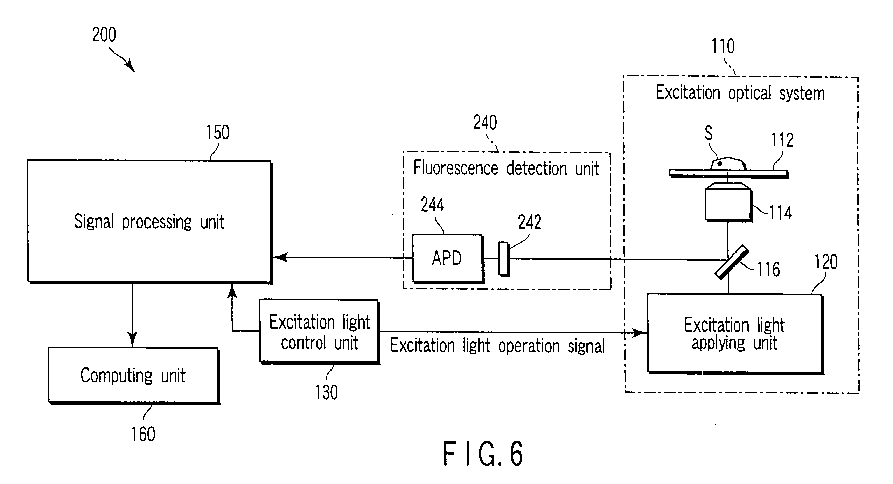

FIG. 6 schematically shows a fluorescence spectroscopy apparatus according to the second embodiment of the present invention. A fluorescence spectroscopy apparatus 200 of this embodiment is the same as the fluorescence spectroscopy apparatus 100 of the first embodiment except for a fluorescence detection unit 240.

The fluorescence detection unit 240 comprises a multi-band filter 242 and a light-detecting element 244. The multi-band filter 242 selectively transmits the first fluorescence and the second fluorescence. The light-detecting element 244 has a light-detecting band in which the first fluorescence and the second fluorescence can be detected. That is, the light-detecting element 244 has a light-detecting band in which fluorescence components with different wavelengths that are generated by different excitation light beams can be detected.

In this embodiment, the first excitation light and the second excitation light having different wavelengths are exclusively applied to the sample S at shifted times. The first fluorescence and the second fluorescence that are generated from the sample S in accordance with the application of the first excitation light and the second excitation light are time-divisionally detected by the light-detecting element 244 of one fluorescence detection unit 240. This allows accurate cross-correlation computation without any influence of a measurement error due to crosstalk.

<Third Embodiment>

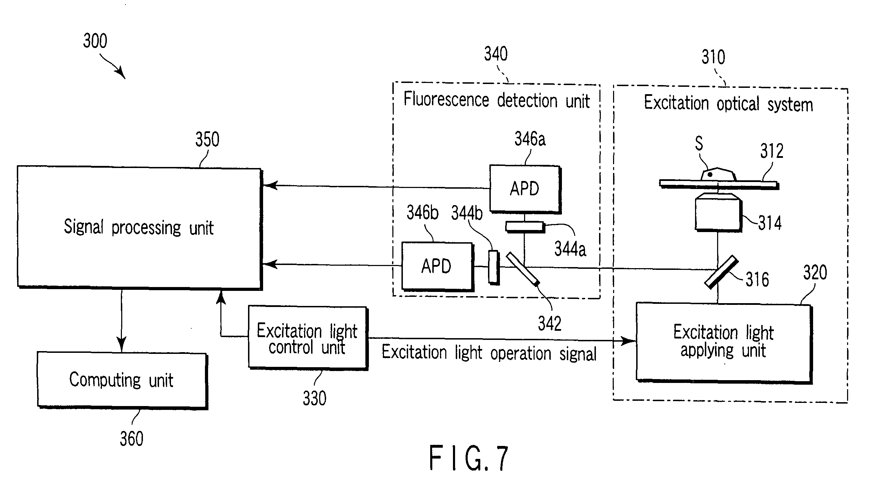

FIG. 7 schematically shows a fluorescence spectroscopy apparatus according to the third embodiment. As shown in FIG. 7, a fluorescence spectroscopy apparatus 300 of this embodiment includes an excitation optical system 310, a fluorescence detection unit 340, a signal processing unit 350, and a computing unit 360. The excitation optical system 310 includes an excitation light applying unit 320 to generate excitation light, a stage 312 on which a sample S is placed, an objective lens 314, and a dichroic mirror 316 to separate excitation light and fluorescence.

The fluorescence spectroscopy apparatus 300 further includes an excitation light control unit 330 to control the excitation light applying unit 320 so that excitation light beams with different wavelengths are exclusively applied to the sample S at shifted times. The excitation light applying unit 320 applies excitation light beams with different wavelengths or intensities to a specific region of the sample S. The wavelength or intensity of excitation light is changed in a time-series manner.

The sample S contains, in the region to which excitation light beams with different wavelengths are applied, different dyes to emit fluorescence in response to the excitation light beams with different wavelengths, respectively. The fluorescence spectra of the different dyes overlap at least partly.

The fluorescence detection unit 340 detects fluorescence generated from the sample S in accordance with the application of excitation light. The fluorescence detection unit 340 detects each of fluorescence components generated in accordance with the application of excitation light beams with different wavelengths or intensities upon separating them.

The signal processing unit 350 generates a signal or data corresponding to the fluorescence detected by the fluorescence detection unit 340. The computing unit 360 performs correlation analysis computation for the fluctuations of the fluorescence by using the signal or data generated by the signal processing unit 350. The computing unit 360 changes a parameter (e.g., a weighting factor to be described later) for correlation analysis computation for each of signals or data corresponding to fluorescence components generated in accordance with the application of excitation light beams with different wavelengths or intensities. The computing unit 360 performs auto-correlation analysis, cross-correlation analysis, or confocal fluorescence coincidence analysis on the basis of the comparison between output signals corresponding to the respective fluorescence components.

The fluorescence detection unit 340 comprises a dichroic mirror 342, a first fluorescence filter 344a, a second fluorescence filter 344b, a first light-detecting element 346a, and a second light-detecting element 346b. The first fluorescence filter 344a selectively transmits the first fluorescence. The second fluorescence filter 344b selectively transmits the second fluorescence. The first light-detecting element 346a has a sensitivity in the wavelength band of the first fluorescence. The second light-detecting element 346b has a sensitivity in the wavelength band of the second fluorescence. That is, the first light-detecting element 346a and the second light-detecting element 346b have sensitivities in different wavelength bands.

The fluorescence spectroscopy apparatus according to this embodiment is operated in accordance with the flowchart of FIG. 4 almost in the same manner as in the first embodiment to apply excitation light, detect fluorescence, and generate operation data.

Data analysis on a multiple $\tau$ correlation function using weighting factors (parameters for correlation analysis) will be described below. In this data analysis, a data table and a weighting factor table are generated from the respective fluorescence detection signals, and auto-correlation and cross-correlation calculations are performed by using the data and weighting factors of the first fluorescence and second fluorescence in the data and weighting factors of the respective fluorescent.

When correlation function computation is performed, octave channels are used as channels for the calculation of data and weighting factors, and the calculation of data and weighting factors is limited to the result obtained by a small finite number of channels, thereby implementing the plotting of calculation results at equal intervals. In addition, the apparatus calculates the average of data and the average of weighting factors that correspond to different delay times in different $\tau$ areas in advance. Assume that in each process using the data and weighting factors of fluorescence components, one data or weighting factor is set as a minimum calculation unit.

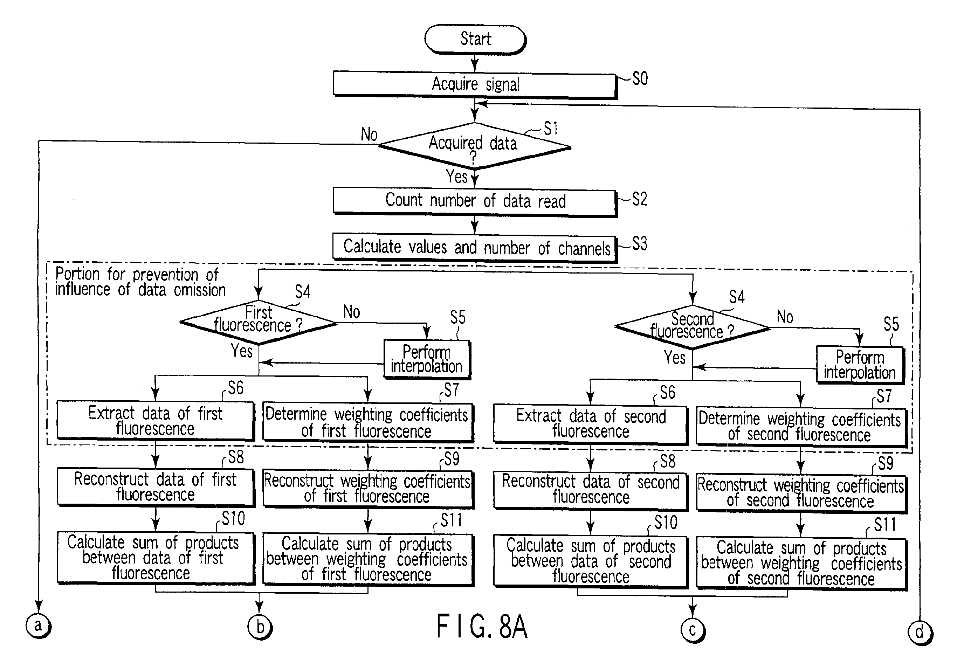

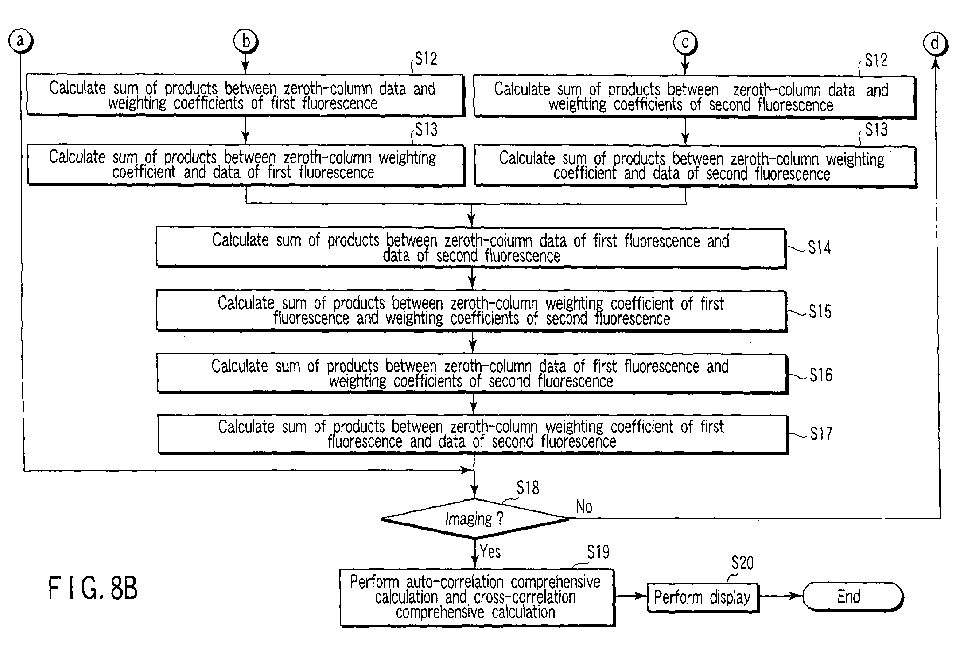

The multiple $\tau$ scheme will be described in detail below with reference to the flowcharts of FIGS. 8A and 8B.

[Step S0]

As measurement data about a sample, the time-series measurement data of the first fluorescence and second fluorescence are acquired. A continuous signals obtained by an interpolation method for the acquired time-series data is shown in FIG. 5.

[Step S1]

Whether there is any acquired data is determined. IF YES, the process advances to step S2. If NO, the process enters the imaging determination in step S18

[Step S2]

The number of data read is counted. The total number of data counted is used for channel calculation, comprehensive calculation, and the like.

[Step S3]

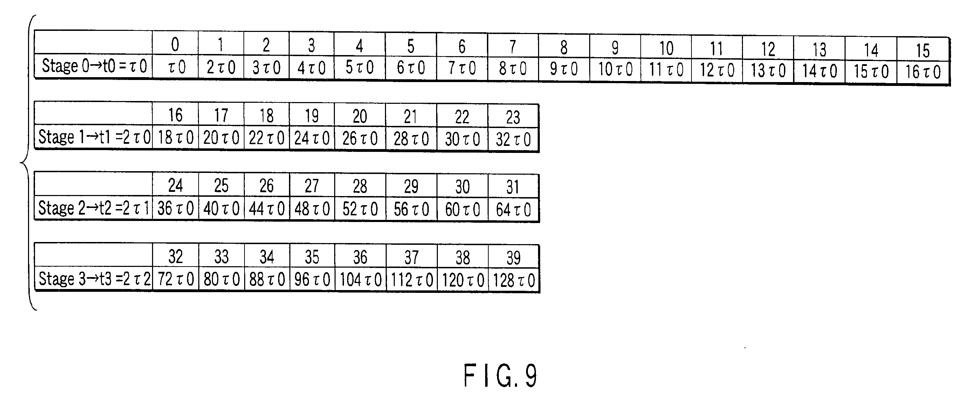

For example, plotted $\tau$ values (channel values) and the number of channels in the multiple $\tau$ scheme are calculated. The multiple $\tau$ scheme determines the number of channels from the total number of data read. According to a specific calculation method, as shown in FIG. 9, the first 16 channel values are based on a bin time $\tau_0$ as a reference value, and every subsequent eighth channel value is based the value obtained by doubling the bin time $\tau_0$ as a reference value.

In other words, the first 16 channels are set in the zeroth stage, and subsequent sets of eight channels each are set in the first stage, second stage, .... An increment (reference value) in channel value in each stage is represented by $2^n\tau_0$ where n is the number of stages. For example, an increment in channel value in the zeroth stage is $\tau_0$, and an increment in channel value in the second stage is $4\tau_0$.

A necessary number of channels are calculated on the basis of bin times and the total number of data read.

[Steps S4 and S5]

Fluorescence is identified. If it is determined in step S4 that the first fluorescence detection signal indicates the first excitation light, the input data is processed as the effective data of the first fluorescence in step S6 and the subsequent steps. If the excitation light is the second excitation light, the input is processed as zero in step S5. If the excitation light is neither the first excitation light nor the second excitation light, the data of the first fluorescence is interpolated as zero in step S5 as in the above case. If the second fluorescence detection signal indicates the second excitation light, the input data is processed as the effective data of the second fluorescence in the step S6 and the subsequent steps. If the excitation light is the first excitation light, the data of the first fluorescence is processed as zero in step S5. If the excitation light is neither the second excitation light nor the first excitation light, the data of the second fluorescence is interpolated as zero in step S5.

[Step S6]

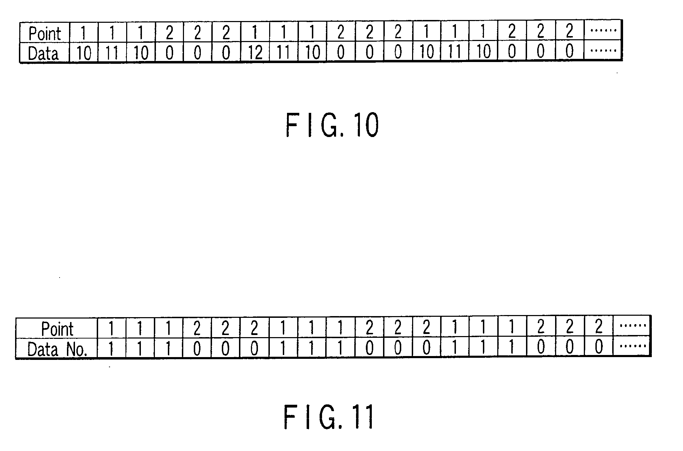

Data extraction is performed. First of all, the data of the first fluorescence is extracted from the first fluorescence detection signal, and the data is embedded at a position corresponding to the first fluorescence while data 0 is embedded at a position corresponding to the other fluorescence (second fluorescence). As a result, the data table of the first fluorescence shown in FIG. 10 is generated. Likewise, another data table for the second fluorescence is generated. As a result, two data tables are respectively generated for the first fluorescence and the second fluorescence.

[Step S7]

In order to prevent the influence of each period during which a signal or data is omitted on an analysis result, different weights are assigned between each period during which a signal or data is omitted and each of other periods. A weighting factor table for this purpose is generated. When excitation light is measured in a time-series manner while being switched, the detection data contains the information of the types of excitation light (i.e., the types of fluorescence) in addition to the information of the size of the data. The multiple $\tau$ scheme uses the information of the types of fluorescence as weighting factors for calculation. When data measurement is performed for the first fluorescence and the second fluorescence, the resultant data is represented by one data (weighting factor = 1). A weighting factor of 1 in the first fluorescence detection signal is embedded at each position corresponding to the first fluorescence, and embeds a weighting factor of 0 at each position corresponding to the other fluorescence. As a consequence, the first fluorescence weighting factor table shown in FIG. 11 is generated. Another weighting factor table for the second fluorescence is generated in the same manner as described above. That is, tables in which weighting factors as parameters used for computation are changed for the respective data corresponding to the first fluorescence and the second fluorescence are generated. As a consequence, two weighting factor tables are generated for the first fluorescence and the second fluorescence.

[Step S8]

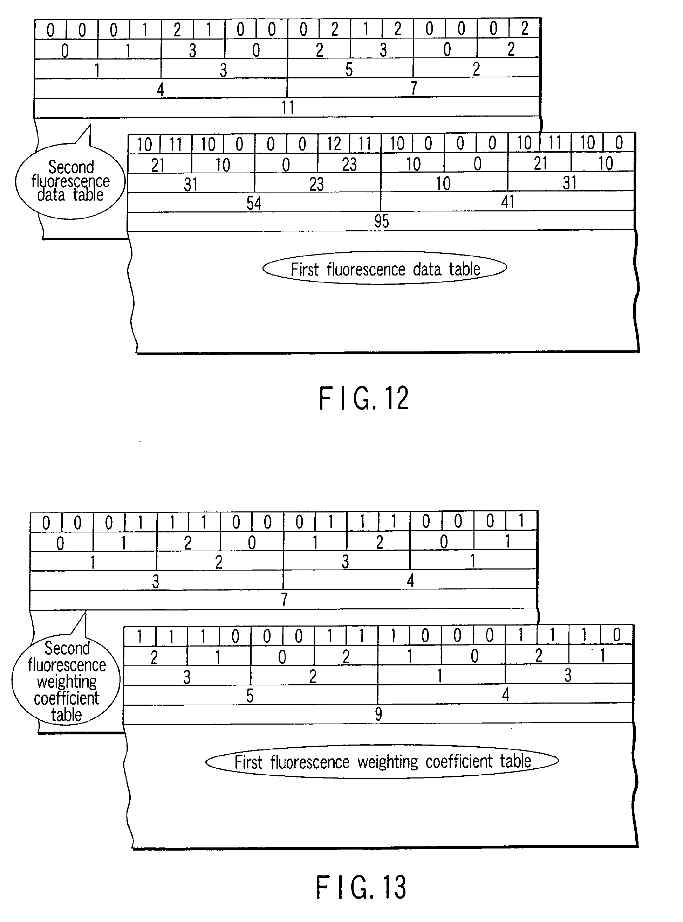

Data reconstruction is performed. That is, the first channel data of the respective channels with different reference values (increments) is calculated. Summation processing is performed for each fluorescence by using the data tables for the first fluorescence and second fluorescence. With regard to a delay time $\tau$ after channel 16, since the reference (increment) is doubled for every eighth channel, the data of each channel comprises the sum of two data before the reference value (increment) is doubled. Changes in data in detail are shown in FIG. 12. Performing summation processing for the first fluorescence and the second fluorescence will sequentially generate channel data having new reference values (increments) from data division tables, thereby generating new data tables.

In other words, the array of all the read data is set as the data array of zeroth row, and the array of the sums of pairs of adjacent data is set as the data array of the first row. Subsequently, the same operation is repeated to generate the data arrays of the second row, third row, .... This operation is repeated until data arrays equal in number to channel stages are obtained. In each data table obtained in this manner, the data of each row correspond to the channels in a corresponding stage. For example, the second-row zeroth-column data corresponds to the second-stage zeroth-column channel.

[Step S9]

Weighting coefficient reconstruction is performed. That is, the first channel weighting factors of respective channels with different reference values (increments) is calculated. Summation processing is performed for each fluorescence by using the weighting factor tables for the first fluorescence and second fluorescence. The weighting factor tables change in the same manner as in step S8. That is, in the process of summation processing, weighting factors for channels with new reference values (increments) are sequentially formed (FIG. 13), thereby generating new weighting factor tables.

In other words, the array of all weighting factors is set as the weighting factor array of the zeroth row, and the array of the sums of pairs of adjacent weighting factors is set as the weighting factor array of the first row. Subsequently, this operation is repeated to generate the weighing factor arrays of the second row, third row, .... This operation is repeated until weighting factor arrays equal in number to channel stages are obtained. In each weighting factor table obtained in this manner, the weighting factors of each row correspond to the channels in a corresponding stage.

[Step S10]

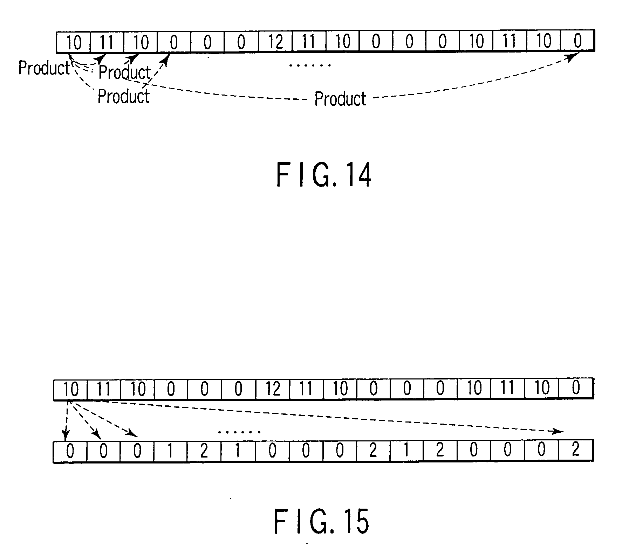

Sum-of-product calculation between data is performed for data $I_{D1}$ of the first fluorescence. That is, as shown in FIG. 14, data at channel positions of the first fluorescence at which the same reference value (increment) is set is multiplied by the zeroth-column data, and the sum of the products is calculated. In other words, in the data array of the first fluorescence that corresponds to the channels of each stage, the sum of the products between the first data and the respective remaining data is obtained. Sum-of-product calculation between data is then performed for data $I_{D2}$ of the second fluorescence. That is, the same processing is performed for the second fluorescence, so that data at channel positions of the second fluorescence at which the same reference value (increment) is set is multiplied by the zeroth-column data, and the sum of the products is calculated. In other words, in the data array of the second fluorescence that corresponds to the channels of each stage, the sum of the products between the first data and the respective remaining data is obtained.

[Step S11]

Sum-of-product calculation between weighting factors is performed for weighting factors $W_{D1}$ of the first fluorescence. That is, weighting factors at channel positions of the first fluorescence at which the same reference value (increment) is set are multiplied by the zeroth-column weighting factor, and the sum of the products is calculated. In other words, in the weighting factor array of the first fluorescence that corresponds to the channels of each stage, the sum of the products between the first weighting factor and the respective remaining weighting factors is obtained. Sum-of-product calculation between weighting factors is then performed for weighting factors $W_{D2}$ of the second fluorescence. That is, the same processing is performed for the second fluorescence, so that weighting factors at channel positions of the second fluorescence at which the same reference value (increment) is set is multiplied by the zeroth-column weighting factor, and the sum of the products is calculated. In other words, in the weighting factor array of the second fluorescence that corresponds to the channels of each stage, the sum of the products between the first weighting factor and the respective remaining weighting factors is obtained.

[Step S12]

Sum-of-product calculation between the zeroth-column data and weighting factors is performed for the data $I_{D1}$ and weighting factors $W_{D1}$ of the first fluorescence. That is, weighting factors at channel positions of the first fluorescence at which the same reference value (increment) is set are multiplied by the zeroth-column data, and the sum of the products is calculated. In other words, in the data array and the weighting factor array of the first fluorescence that corresponds to the channels of each stage, the sum of the products between the first data and the respective weighting factors is obtained. Sum-of-product calculation between the zeroth-column data and weighting factors is performed for the data $I_{D2}$ and weighting factors $W_{D2}$ of the second fluorescence. That is, the same processing is performed for the second fluorescence, so that weighting factors at channel positions of the second fluorescence at which the same reference value (increment) is set are multiplied by the zeroth-column data, and the sum of the products is calculated. In other words, in the data array and the weighting factor array of the first fluorescence that corresponds to the channels of each stage, the sum of the products between the first data and the respective weighting factors is obtained.

[Step S13]

Sum-of-product calculation between the zeroth-column weighting factor and data is performed for the weighting factors $W_{D1}$ and data $I_{D1}$ of the first fluorescence. That is, data at channel positions of the first fluorescence at which the same reference value (increment) is set is multiplied by the zeroth-column weighting factor, and the sum of the products is calculated. In other words, in the data array and the weighting factor array of the first fluorescence that corresponds to the channels of each stage, the sum of the products between the first weighting factor and the respective data is obtained. Sum-of-product calculation between a weighting factor and data is then performed for the weighting factors $W_{D2}$ and data $I_{D2}$ of the second fluorescence. That is, the same processing is performed for the second fluorescence, so that data at channel positions of the second fluorescence at which the same reference value (increment) is set is multiplied by the zeroth-column weighting factor, and the sum of the products is calculated. In other words, in the data array and the weighting factor array of the second fluorescence that corresponds to the channels of each stage, the sum of the products between the first weighting factor and the respective data is obtained.

[Step S14]

Sum-of-product calculation between the data of the first fluorescence and second fluorescence is performed for the data $I_{D1}$ and $I_{D2}$ of the first fluorescence and second fluorescence. That is, as shown in FIG. 15, data at channel positions of the second fluorescence at which the same reference value (increment) is set is multiplied by the zeroth-column data of the first fluorescence, and the sum of the products is calculated. In other words, in the data array of the first fluorescence and the data array of the second fluorescence that correspond to the channels of each stage, the sum of the products between the first data of the data array of the first fluorescence and the respective data of the data array of the second fluorescence is obtained.

[Step S15]

Sum-of-product calculation between the weighting factors of the first fluorescence and second fluorescence is performed for the weighting factors $W_{D1}$ and $W_{D2}$ of the first fluorescence and second fluorescence. That is, weighting factors at channel positions of the second fluorescence at which the same reference value (increment) is set are multiplied by the zeroth-column weighting factor of the first fluorescence, and the sum of the products is calculated. In other words, in the weighting factor array of the first fluorescence and the weighting factor array of the second fluorescence that correspond to the channels of each stage, the sum of the products between the first weighting factor of the weighting factor array of the first fluorescence and the respective weighting factors of the weighting factor array of the second fluorescence is obtained.

[Step S16]

Sum-of-product calculation between the zeroth-column data of the first fluorescence and weighting factors of the second fluorescence is performed for the data $I_{D1}$ of the first fluorescence and the weighting factors $W_{D2}$ of the second fluorescence. That is, weighting factors at channel positions of the second fluorescence at which the same reference value (increment) is set are multiplied by the zeroth-column data of the first fluorescence, and the sum of the products is calculated. In other words, in the data array of the first fluorescence and the weighting factor array of the second fluorescence that correspond to the channels of each stage, the sum of the products between the first data of the data array of the first fluorescence and the respective weighting factors of the weighting factor array of the second fluorescence is obtained.

[Step S17]

Sum-of-product calculation between the zeroth-column weighting factor of the first fluorescence and data of the second fluorescence is performed for the weighting factors $W_{D1}$ of the first fluorescence and the data $I_{D2}$ of the second fluorescence. That is, data at channel positions of the second fluorescence at which the same reference value (increment) is set is multiplied by the zeroth-column weighting factor of the first fluorescence, and the sum of the products is calculated. In other words, in the data array of the second fluorescence and the weighting factor array of the first fluorescence that correspond to the channels of each stage, the sum of the products between the first data of the data array of the second fluorescence and the respective weighting factors of the weighting factor array of the first fluorescence is obtained.

[Step S18]

Termination of the computation and imaging are determined. If YES, the process enters comprehensive correlation calculation. If NO, the process returns to the data acquisition in step S1.

[Step S19]

If the data read is complete (YES in step S21), an auto-correlation function and a cross-correlation function are estimated on the basis of the above respective calculation results. That is, correlation functions are estimated by using different analytical expressions for the respective correlation directions of D1 → D2, D1 → D1, and D2 → D2.
For example, the formula (S10 * S11) /(S12 * S13) is used for D1 → D1 and D2 → D2, and the formula (S14 *S15)/(S16 * S17) is used for D1 → D2.
For example, an analytical expression for a cross-correlation function can be expressed by

$$C\left(\tau\right) = \frac{\text{mlF}_{D1}\text{R}_{D2}\text{Sum}\left(\tau\right) \; * \; \text{mlW}_{D1}\text{V}_{D2}\text{Sum}\left(\tau\right)}{\text{mlF}_{D1}\text{V}_{D2}\text{Sum}\left(\tau\right) \; * \; \text{mlW}_{D1}\text{R}_{D2}\text{Sum}\left(\tau\right)}$$

$$\text{mlF}_{D1}\text{R}_{D2}\text{Sum}\left(\tau\right) = \text{way[2]mlFRSum[k]}$$

$$= \text{mlF[0][mlrow][0]} * \text{mlF[1][mlrow][k]}$$

$$\text{mlW}_{D1}\text{V}_{D2}\text{Sum}\left(\tau\right) = \text{way[2]mlWVSum[k]}$$

$$= \text{mlW[0][mlrow][0]} * \text{mlW[1][mlrow][k]} \qquad \cdots (1)$$

$$\text{mlF}_{D1}\text{V}_{D2}\text{Sum}\left(\tau\right) = \text{way[2]mlFSum[k]}$$

$$= \text{mlF[0][mlrow][0]} * \text{mlW[1][mlrow][k]}$$

$$\text{mlW}_{D1}\text{R}_{D2}\text{Sum}\left(\tau\right) = \text{way[2]mlFRSum[k]}$$

$$= \text{mlW[0][mlrow][0]} * \text{mlF[1][mlrow][k]}$$

where $\text{mlF}_D\text{R}_D\text{Sum}(T_v)$ represents sum-of-product calculation between data, $\text{mlW}_D\text{V}_D\text{Sum}(\tau_v)$ represents sum-of-product calculation between weighting factors, $\text{mlF}_D\text{V}_D\text{Sum}(\tau_v)$ represents sum-of-product calculation between the zeroth-column data and weighting factors, and $\text{mlW}_D\text{R}_D\text{Sum}(\tau_v)$ represents sum-of-product calculation between the zeroth-column weighting factors and data. Here the subscript D is D1 or D2, and corresponds to calculation target data, i.e., data corresponding to the first fluorescence or data corresponding to the second fluorescence. Note that $F_{D1}$ and $R_{D2}$ represent the reconstructed data of the data D1 and D2 by summation, and $W_{D1}$ and $V_{D2}$ represent the numbers of data (weighting factors) used for the calculation of the data $F_{D1}$ and $R_{D2}$.

Equations (1) are based on cross-correlation analytical expression (2) given below. Cross-correlation analytical expression (2) is derived by weighting the general-purpose cross-correlation function represented by equation (3). Equation (3) can be expressed as expression (9) if $N_1 = N_2 = N_{12}$.

$$C\left(\tau\right) = \frac{\left(\sum D_1(t)\, D_2(t-\tau)\right) * \left(\sum W_1(t)\, W_2(t-\tau)\right)}{\left(\sum W_2(t-\tau)\, D_1(t)\right) * \left(\sum W_1(t)\, D_2(t-\tau)\right)} \qquad \cdots (2)$$

$$C\left(\tau\right) = \frac{\left(\sum D_1(t)\, D_2(t+\tau)\right)\big/ N_{12}}{\left(\left(\sum D_1(t)\right)\big/ N_1\right) * \left(\left(\sum D_2(t)\right)\big/ N_2\right)} \qquad \cdots (3)$$

$$C\left(\tau\right) = \frac{\left(\sum D_1(t)\, D_2(t+\tau)\right) * N_{12}}{\left(\sum D_1(t)\right) * \left(\sum D_2(t)\right)} \qquad \cdots (4)$$

[Step S20]

Processing such as displaying a cross-correlation function in the form of a curve is performed on the basis of each final calculation result.

This embodiment performs correlation analysis computation for the fluctuations of fluorescence while changing a parameter for each signal or data, of the signals or data generated by the signal processing unit 350, which corresponds to the fluorescence generated in accordance with the application of excitation light beams with different wavelengths or intensities. This allows accurate cross-correlation computation without any influence of a measurement error due to crosstalk.

<Fourth Embodiment>

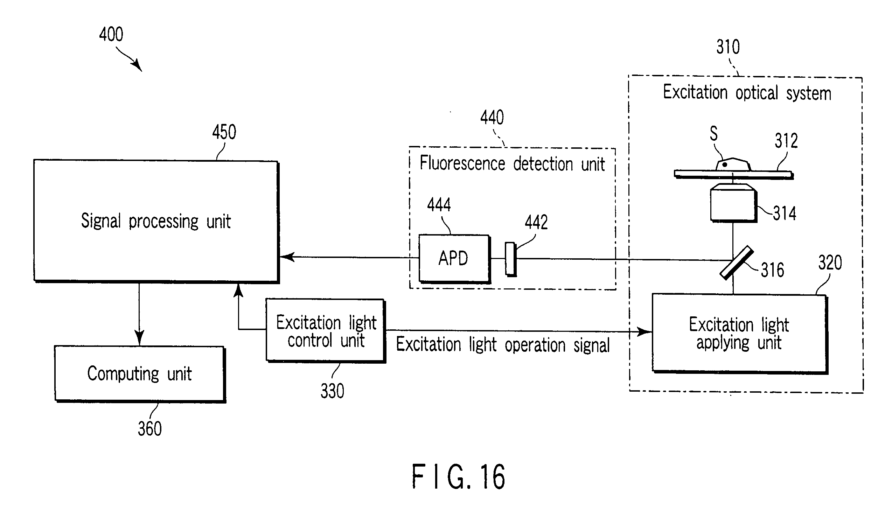

FIG. 16 schematically shows a fluorescence spectroscopy apparatus according to the fourth embodiment of the present invention. A fluorescence spectroscopy apparatus 400 of this embodiment is the same as the fluorescence spectroscopy apparatus 300 of the third embodiment except for a fluorescence detection unit 440 and a signal processing unit 450.

The fluorescence detection unit 440 comprises a multi-band filter 442 and a light-detecting element 444. The multi-band filter 442 selectively transmits the first fluorescence and the second fluorescence. The light-detecting element 444 has a light-detecting band in which the first fluorescence and the second fluorescence can be detected. That is, the light-detecting element 444 has a light-detecting band in which fluorescence components with different wavelengths that are generated by different excitation light beams can be detected.

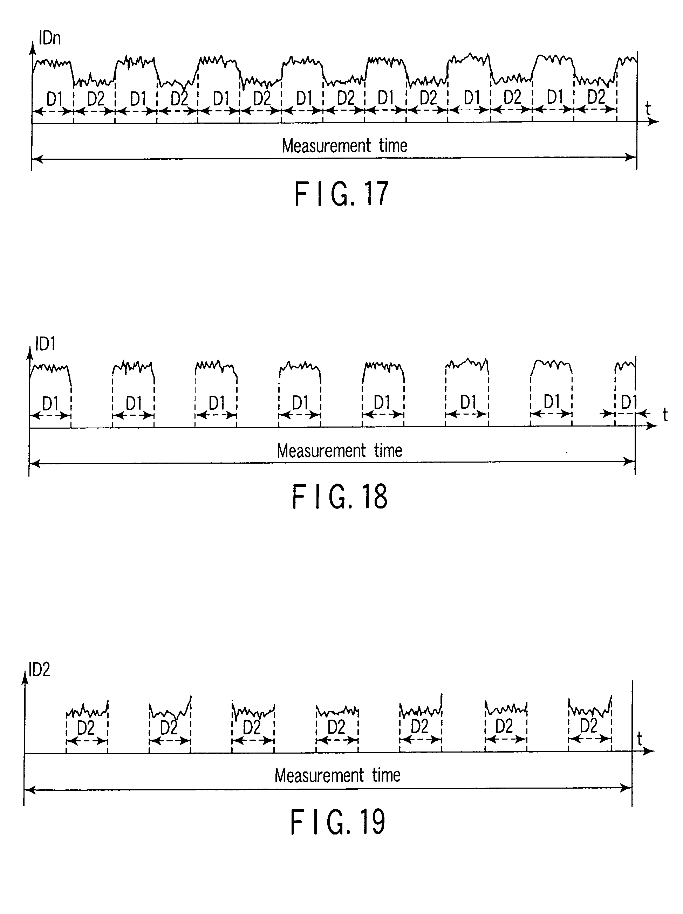

In this embodiment, as shown in FIG. 17, the detection signal output from the fluorescence detection unit 440 is a time-series mixed signal alternately containing the first fluorescence and the second fluorescence. Referring to FIG. 17, reference symbols D1 and D2 respectively denote time ranges for the detection of the first fluorescence and the second fluorescence. That is, this signal alternately contains the detection signals of the first fluorescence and second fluorescence, and can be divided temporally. In practice, a time-series mixed signal includes time ranges in which the first excitation light and the second excitation light are switched, in addition to the time ranges for the detection of the first fluorescence and second fluorescence. FIG. 17 does not illustrate such details.

This time-series mixed signal is sent to the signal processing unit 450 to be divided into signals for the respective fluorescence components. That is, the signal processing unit 450 extracts the pseudo first fluorescence detection signal shown in FIG. 18 and the pseudo second fluorescence detection signal shown in FIG. 19 from the time-series mixed signal in FIG. 17. The first fluorescence detection signal is generated such that only fluorescence intensities in the periods during which an excitation light applying unit 320 applies the first fluorescence are extracted as first fluorescence information, and information in each of the remaining periods is set to 0. Likewise, the first fluorescence detection signal is generated such that only fluorescence intensities in the periods during which the excitation light applying unit 320 applies the second fluorescence are extracted as second fluorescence information, and information in each of the remaining periods is set to 0. In this manner, the signal processing unit 450 generates the pseudo first fluorescence detection signal and the pseudo second fluorescence detection signal on the basis of the fluctuation signal output from the fluorescence detection unit 440.

The pseudo first fluorescence detection signal and the pseudo second fluorescence detection signal are then processed in the same manner as the first fluorescence detection signal and the second fluorescence detection signal described in the third embodiment.

This embodiment performs correlation analysis computation for the fluctuations of fluorescence while changing a parameter for each signal or data, of the signals or data generated by the signal processing unit 350, which corresponds to the fluorescence generated in accordance with the application of excitation light beams with different wavelengths or intensities. This allows accurate cross-correlation computation without any influence of a measurement error due to crosstalk.

Although the embodiments of the present invention have been described with reference to the views of the accompanying drawing, the present invention is not limited to these embodiments. The embodiments can be variously modified and changed within the spirit and scope of the invention.

Industrial Applicability

According to the present invention, there is provided a fluorescence spectroscopy apparatus that can perform accurate cross-correlation computation without any influence of a measurement error due to crosstalk.

**Claims**

1. A fluorescence spectroscopy apparatus **characterized by** comprising:

   excitation optical means for alternately applying light beams with different wavelengths or different intensities to a specific region of a sample at shifted times;
   fluorescence detection means for detecting fluorescence generated from the sample;
   signal processing means for performing signal processing for a signal detected by the fluorescence detection means; and
   computing means for performing correlation analysis on a signal generated by the signal processing means.

2. A fluorescence spectroscopy apparatus according to claim 1, **characterized in that** the sample contains, in the region to which the excitation light beams with the different wavelengths are applied, different dyes to emit fluorescence in response to the excitation light beams with the different wavelengths, respectively, and fluorescence spectra of the different dyes overlap at least partly.

3. A fluorescence spectroscopy apparatus according to claim 1, **characterized in that** the excitation optical means repeatedly applies excitation light beams with different wavelengths to the sample at a predetermined timing.

4. A fluorescence spectroscopy apparatus according to claim 1, **characterized in that** the excitation optical means includes a plurality of light sources to emit light beams with different wavelengths, and means for selecting a light beam to be applied to the sample from the light beams with different wavelengths emitted from the light sources.

5. A fluorescence spectroscopy apparatus according to claim 4, **characterized in that** the means for selecting the light beam to be applied is placed in a common optical path through which the light beams with the different wavelengths pass.

6. A fluorescence spectroscopy apparatus according to claim 4, **characterized in that** the means for selecting the light beam to be applied comprises light source switching means for selecting a light source to emit light or an acoustooptic element that is configured to control a passband.

7. A fluorescence spectroscopy apparatus according to claim 1, **characterized in that** the fluorescence detection means comprises a plurality of light-detecting elements having sensitivities in different wavelength bands.

8. A fluorescence spectroscopy apparatus according to claim 1, **characterized in that** the fluorescence detection means comprises one light-receiving element having a light-detecting band in which fluorescence components with different wavelengths that are generated by the different excitation light beams are configured to be detected.

9. A fluorescence spectroscopy apparatus according to claim 1, **characterized in that** the fluorescence detection means separates and detects each of fluorescence components generated in accordance with application of the excitation light beams with the different wavelengths or the different intensities.

EP 1 942 334 A1

100

140

110

Fluorescence detection unit

Excitation optical system

150

146a

S

112

APD

114

Signal processing unit

146b 144b

144a

APD

116

120

Excitation light
control unit

Excitation light operation signal

Excitation light
applying unit

142

130

Computing unit

160

FIG. 1

Excitation light operation signal ⟶ | AOTF | 〜126

122b 〜 | Light source | ⟶ | / 〜124b

122a 〜 | Light source | ⟶ | / 〜124a

# F I G. 2

Excitation light
operation signal

128

| Switch | 122b

Light source ⟶ | 〜124b

Light source ⟶ | 〜124a

122a

# F I G. 3

```
                    ┌─────────────┐
                    │    Start    │
                    └─────────────┘
                           │
    ┌──────────────────────┼────────────────────────────┐
    │                      ▼                             │
    │         ┌──────────────────────────┐              │
    │         │ Generate excitation light│              │
    │         │   operation signal (0, 1)│              │
    │         └──────────────────────────┘              │
    │                      │                             │
    │                      ▼                             │
    │              ╱─────────────╲          No           │
    │             ╱  Excitation    ╲───────────┐        │
    │             ╲ light operation ╱           │        │
    │              ╲  signal = 0 ?  ╱           │        │
    │               ╲─────────────╱             │        │
    │                      │ Yes                │        │
    │                      ▼                    ▼        │
    │         ┌──────────────────────┐  ┌──────────────────────────┐
    │         │ Apply first          │  │ Apply second             │
    │         │ excitation light     │  │ excitation light         │
    │         └──────────────────────┘  └──────────────────────────┘
    │                      │                    │
    │                      ▼                    ▼
    │         ┌──────────────────────┐  ┌──────────────────────────┐
    │         │ Detect first         │  │ Detect second            │
    │         │ fluorescence         │  │ fluorescence             │
    │         └──────────────────────┘  └──────────────────────────┘
    │                      │                    │
    │                      ▼                    ▼
    │         ┌──────────────────────┐  ┌──────────────────────────┐
    │         │ Process first        │  │ Process second           │
    │         │ fluorescence         │  │ fluorescence             │
    │         │ detection signal     │  │ detection signal         │
    │         └──────────────────────┘  └──────────────────────────┘
    │                      │◄──────────────────┘
    │                      ▼
    │         ┌──────────────────────┐
    │         │ Generate operation   │
    │         │ data                 │
    │         └──────────────────────┘
    │                      │
    │                      ▼
    │         ┌──────────────────────┐
    │         │ Perform correlation  │
    │         │ analysis             │
    │         └──────────────────────┘
    │                      │
    │   No                 ▼
    └──────────╱─────────────────╲
              ╱        Is          ╲
              ╲   measurement      ╱
               ╲  complete ?      ╱
                ╲───────────────╱
                      │ Yes
                      ▼
               ┌─────────────┐
               │     End     │
               └─────────────┘
```

FIG. 4

FIG. 5

Excitation light operation signal

Applied excitation light

First excitation light | Second excitation light | First excitation light | Second excitation light | First excitation light | Second excitation light

First fluorescence detection signal

Second fluorescence detection signal

Operation data

D1 | D2 | D1 | D2 | D1 | D2

D1: first fluorescence detection signal & excitation light operation signal

D2: second fluorescence detection signal & excitation light operation signal

EP 1 942 334 A1

200

110

Excitation optical system

150

240

S    112

Fluorescence detection unit

Signal processing unit

244    242

114

APD

116    120

Excitation light
control unit    Excitation light operation signal

Excitation light
applying unit

Computing unit

130

160

FIG.6

EP 1 942 334 A1

300

340

310

Fluorescence detection unit

Excitation optical system

350

346a

S

312

Signal processing unit

APD

314

346b 344b

344a

APD

316

320

342

Excitation light
control unit

Excitation light operation signal

Excitation light
applying unit

Computing unit

330

360

F I G. 7

Start

Acquire signal — S0

Acquired data ? — S1
No → (back to Acquire signal)
Yes ↓

Count number of data read — S2

Calculate values and number of channels — S3

Portion for prevention of influence of data omission

First fluorescence ? — S4
Yes ↓
No →

Extract data of first fluorescence — S6

Perform interpolation — S5

Determine weighting coefficients of first fluorescence — S7

Reconstruct data of first fluorescence — S8

Reconstruct weighting coefficients of first fluorescence — S9

Calculate sum of products between data of first fluorescence — S10

Calculate sum of products between weighting coefficients of first fluorescence — S11

a

b

Second fluorescence ? — S4
Yes ↓
No →

Extract data of second fluorescence — S6

Perform interpolation — S5

Determine weighting coefficients of second fluorescence — S7

Reconstruct data of second fluorescence — S8

Reconstruct weighting coefficients of second fluorescence — S9

Calculate sum of products between data of second fluorescence — S10

Calculate sum of products between weighting coefficients of second fluorescence — S11

c

d

F I G. 8A

19

(a) → (b) → (c) → (d)

Calculate sum of products between zeroth-column data and weighting coefficients of first fluorescence — S12

Calculate sum of products between zeroth-column weighting coefficient and data of first fluorescence — S13

Calculate sum of products between zeroth-column data and weighting coefficients of second fluorescence — S12

Calculate sum of products between zeroth-column weighting coefficient and data of second fluorescence — S13

Calculate sum of products between zeroth-column data of first fluorescence and data of second fluorescence — S14

Calculate sum of products between zeroth-column weighting coefficient of first fluorescence and weighting coefficients of second fluorescence — S15

Calculate sum of products between zeroth-column data of first fluorescence and weighting coefficients of second fluorescence — S16

Calculate sum of products between zeroth-column weighting coefficient of first fluorescence and data of second fluorescence — S17

Imaging ? — S18

No

Yes

Perform auto-correlation comprehensive calculation and cross-correlation comprehensive calculation — S19

Perform display — S20

End

F I G. 8B

| Stage 0→t0 = τ0 | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| | $\tau 0$ | $2\tau 0$ | $3\tau 0$ | $4\tau 0$ | $5\tau 0$ | $6\tau 0$ | $7\tau 0$ | $8\tau 0$ | $9\tau 0$ | $10\tau 0$ | $11\tau 0$ | $12\tau 0$ | $13\tau 0$ | $14\tau 0$ | $15\tau 0$ | $16\tau 0$ |

| Stage 1→t1 =2τ0 | 16 | 17 | 18 | 19 | 20 | 21 | 22 | 23 |
|---|---|---|---|---|---|---|---|---|
| | $18\tau 0$ | $20\tau 0$ | $22\tau 0$ | $24\tau 0$ | $26\tau 0$ | $28\tau 0$ | $30\tau 0$ | $32\tau 0$ |

| Stage 2→t2 =2τ1 | 24 | 25 | 26 | 27 | 28 | 29 | 30 | 31 |
|---|---|---|---|---|---|---|---|---|
| | $36\tau 0$ | $40\tau 0$ | $44\tau 0$ | $48\tau 0$ | $52\tau 0$ | $56\tau 0$ | $60\tau 0$ | $64\tau 0$ |

| Stage 3→t3 =2τ2 | 32 | 33 | 34 | 35 | 36 | 37 | 38 | 39 |
|---|---|---|---|---|---|---|---|---|
| | $72\tau 0$ | $80\tau 0$ | $88\tau 0$ | $96\tau 0$ | $104\tau 0$ | $112\tau 0$ | $120\tau 0$ | $128\tau 0$ |

FIG. 9

| Point | 1 | 1 | 1 | 2 | 2 | 2 | 1 | 1 | 1 | 2 | 2 | 2 | 1 | 1 | 1 | 2 | 2 | 2 | ...... |
|---|---|---|---|---|---|---|---|---|---|---|---|---|---|---|---|---|---|---|---|
| Data | 10 | 11 | 10 | 0 | 0 | 0 | 12 | 11 | 10 | 0 | 0 | 0 | 10 | 11 | 10 | 0 | 0 | 0 | ...... |

# F I G. 10

| Point | 1 | 1 | 1 | 2 | 2 | 2 | 1 | 1 | 1 | 2 | 2 | 2 | 1 | 1 | 1 | 2 | 2 | 2 | ...... |
|---|---|---|---|---|---|---|---|---|---|---|---|---|---|---|---|---|---|---|---|
| Data No. | 1 | 1 | 1 | 0 | 0 | 0 | 1 | 1 | 1 | 0 | 0 | 0 | 1 | 1 | 1 | 0 | 0 | 0 | ...... |

# F I G. 11

**Second fluorescence data table**

| 0 | 0 | 0 | 1 | 2 | 1 | 0 | 0 | 0 | 2 | 1 | 2 | 0 | 0 | 0 | 2 |
|---|---|---|---|---|---|---|---|---|---|---|---|---|---|---|---|
| 0 | | 1 | | 3 | | 0 | | 2 | | 3 | | 0 | | 2 | |
| 1 | | | | 3 | | | | 5 | | | | 2 | | | |
| 4 | | | | | | | | 7 | | | | | | | |
| 11 | | | | | | | | | | | | | | | |

**First fluorescence data table**

| 10 | 11 | 10 | 0 | 0 | 0 | 12 | 11 | 10 | 0 | 0 | 0 | 10 | 11 | 10 | 0 |
|---|---|---|---|---|---|---|---|---|---|---|---|---|---|---|---|
| 21 | | 10 | | 0 | | 23 | | 10 | | 0 | | 21 | | 10 | |
| 31 | | | | 23 | | | | 10 | | | | 31 | | | |
| 54 | | | | | | | | 41 | | | | | | | |
| 95 | | | | | | | | | | | | | | | |

## FIG. 12

**Second fluorescence weighting coefficient table**

| 0 | 0 | 0 | 1 | 1 | 1 | 0 | 0 | 0 | 1 | 1 | 1 | 0 | 0 | 0 | 1 |
|---|---|---|---|---|---|---|---|---|---|---|---|---|---|---|---|
| 0 | | 1 | | 2 | | 0 | | 1 | | 2 | | 0 | | 1 | |
| 1 | | | | 2 | | | | 3 | | | | 1 | | | |
| 3 | | | | | | | | 4 | | | | | | | |
| 7 | | | | | | | | | | | | | | | |

**First fluorescence weighting coefficient table**

| 1 | 1 | 1 | 0 | 0 | 0 | 1 | 1 | 1 | 0 | 0 | 0 | 1 | 1 | 1 | 0 |
|---|---|---|---|---|---|---|---|---|---|---|---|---|---|---|---|
| 2 | | 1 | | 0 | | 2 | | 1 | | 0 | | 2 | | 1 | |
| 3 | | | | 2 | | | | 1 | | | | 3 | | | |
| 5 | | | | | | | | 4 | | | | | | | |
| 9 | | | | | | | | | | | | | | | |

## FIG. 13

| 10 | 11 | 10 | 0 | 0 | 0 | 12 | 11 | 10 | 0 | 0 | 0 | 10 | 11 | 10 | 0 |
|----|----|----|---|---|---|----|----|----|---|---|---|----|----|----|---|

Product Product Product · · · · · · Product

**F I G. 14**

| 10 | 11 | 10 | 0 | 0 | 0 | 12 | 11 | 10 | 0 | 0 | 0 | 10 | 11 | 10 | 0 |
|----|----|----|---|---|---|----|----|----|---|---|---|----|----|----|---|

· · · · · ·

| 0 | 0 | 0 | 1 | 2 | 1 | 0 | 0 | 0 | 2 | 1 | 2 | 0 | 0 | 0 | 2 |
|---|---|---|---|---|---|---|---|---|---|---|---|---|---|---|---|

**F I G. 15**

FIG. 16

IDn

D1 D2 D1 D2 D1 D2 D1 D2 D1 D2 D1 D2 D1 D2

t

Measurement time

F I G. 17

ID1

D1 D1 D1 D1 D1 D1 D1 D1

t

Measurement time

F I G. 18

ID2

D2 D2 D2 D2 D2 D2 D2

t

Measurement time

F I G. 19

F I G. 20

## INTERNATIONAL SEARCH REPORT

| International application No. |
|---|
| PCT/JP2006/319132 |

| A. CLASSIFICATION OF SUBJECT MATTER |
|---|
| *G01N21/64*(2006.01)i |
| |
| According to International Patent Classification (IPC) or to both national classification and IPC |

| B. FIELDS SEARCHED |
|---|
| Minimum documentation searched (classification system followed by classification symbols) |
| G01N21/00-G01N21/01, G01N21/17-G01N21/74, G01J3/00-G01J3/52 |
| |

| Documentation searched other than minimum documentation to the extent that such documents are included in the fields searched |
|---|
| Jitsuyo Shinan Koho    1922-1996    Jitsuyo Shinan Toroku Koho    1996-2006 |
| Kokai Jitsuyo Shinan Koho    1971-2006    Toroku Jitsuyo Shinan Koho    1994-2006 |

| Electronic data base consulted during the international search (name of data base and, where practicable, search terms used) |
|---|
| |

| C. DOCUMENTS CONSIDERED TO BE RELEVANT | | |
|---|---|---|
| Category* | Citation of document, with indication, where appropriate, of the relevant passages | Relevant to claim No. |
| Y | JP 10-500479 A (Gary Brooker),<br>13 January, 1998 (13.01.98),<br>Full text; Figs. 2 to 8<br>& US 5491343 A     & EP 783680 A<br>& WO 1995/026498 A1    & AU 1977995 A | 1-9 |
| Y | JP 4-215044 A (The BOC Group, Inc.),<br>05 August, 1992 (05.08.92),<br>Full text; Fig. 1<br>& US 5102625 A       & EP 442060 A3 | 1-9 |
| Y | JP 2004-187581 A (Olympus Corp.),<br>08 July, 2004 (08.07.04),<br>Full text; Fig. 5<br>(Family: none) | 1-9 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 20 October, 2006 (20.10.06) | 31 October, 2006 (31.10.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| | International application No. |
|---|---|
| | PCT/JP2006/319132 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 9-126888 A  (Kyoto Daiichi Kagaku Co., Ltd.), 16 May, 1997 (16.05.97), Par. Nos. [0036] to [0042]; Fig. 2 & US 6404492 B        & EP 867697 A1 & WO 1997/016708 A1 | 5,6 |
| Y | JP 6-501856 A  (Worcester Polytechnic Institute), 03 March, 1994 (03.03.94), Full text; Fig. 1 & US 5112124 A        & EP 525107 A & WO 1991/015992 A1 | 8 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KINJYO.** Single Molecule Detection Using Fluorescence Correlation Spectroscopy. *Protein Nucleic Acid Enzyme,* 1999, vol. 44 (9), 1431-1438
- **PETRA. SCHWILLE.** Dual-Color Fluorescence Cross-Correlation Spectroscopy for Multicomponent Diffusional Analysis in Solution. *Biophysical Journal,* 1997, vol. 72, 1878-1886
- **PETRA. SCHWILLE.** A dynamic view of cellular processes by in vivo fluorescence auto- and cross-correlation spectroscopy. *Methods,* 2003, vol. 29, 74-85
- **WINKLER et al.** Confocal fluorescence coincidence analysis (CFCA. *Proc. Natl. Acad. Sci. U.S.A.,* 1999, vol. 96, 1375-1378